# EUROPEAN PATENT SPECIFICATION

(11) **EP 3 708 367 B1**
(45) Date of publication and mention of the grant of the patent: **11.05.2022**
(21) Application number: 19162685.2
(22) Date of filing: 13.03.2019
(51) Int. Cl.: B32B 38/06, B32B 38/18, B32B 41/00, B44B 5/00, E04F 15/10, B29C 59/04

(54) **EQUIPMENT FOR MAKING PLASTIC FLOORING**
AUSRÜSTUNG ZUM HERSTELLEN EINES KUNSTSTOFFBODENBELAGS
ÉQUIPEMENT POUR FABRIQUER UN REVÊTEMENT DE SOL EN PLASTIQUE

(43) Date of publication of application: 16.09.2020
(73) Proprietor: Lu, Ding Yi, Fangqian Town, Jiangsu Province (CN)
(72) Inventor: Lu, Ding Yi, Fangqian Town, Jiangsu Province (CN)
(74) Representative: Cabinet Chaillot

(56) References cited:
- EP-A1- 3 308 952
- EP-A1- 3 437 864
- US-A1- 2019 217 524

## Description

### FIELD OF THE INVENTION

The present invention relates to an equipment for making plastic flooring and having a registration system.

### BACKGROUND OF THE INVENTION

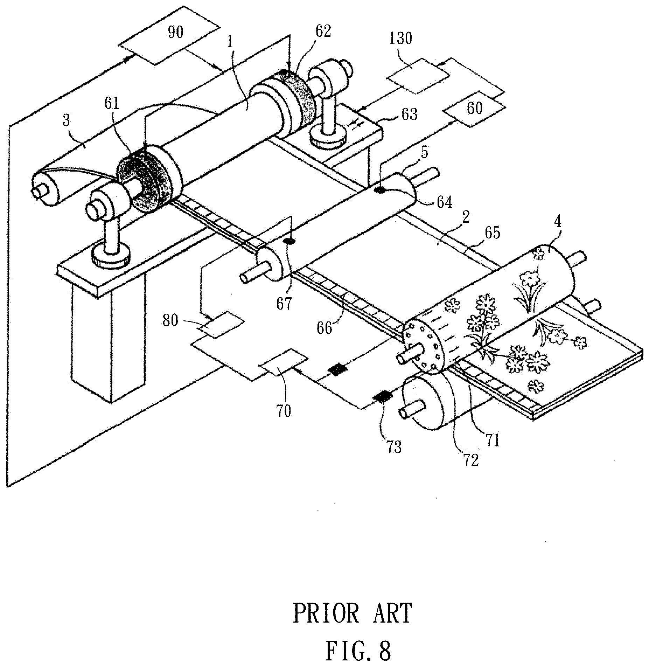

Referring to FIG. 8, a conventional registration device contains: two electromagnetic discs 61, 62 fixed on two ends of a first roller 1 on a slidable plate 63, a first sensing wire 65 and a second sensing wire 66 which are printed on two sides of a surface skin 2 of the first roller 1, and a sensing device 5. The sensing device 5 includes a first electric eye 64 and a second electric eye 67. A second roller 4 includes a third sensing wire 71 correspond to the second sensing wire 66 of the first roller 1, detection points 72 arranged on one end thereof correspond to the third sensing wire 71, and electric detecting eyes 73. Before the surface skin 2 and a bottom material 3 are rolled by the second roller 4, the sensing device 5 and the electric detecting eyes 73 receive signals and inputs the signal into a computer so that an adjustment unit 60 calculates offset so as to drive a motor 130 to rotate clockwise and counterclockwise, hence the slidable plate 63 move horizontally, and computing units 80 and 70 process the signals and send the signals to the computer 90. When the surface skin 2 operates too fast or slow, the computer controls the two electromagnetic discs 61, 62 to adjust rotation speed of the first roller 1 so that the surface skin 2 and the second roller 4 rolls and produce patterns of plastic floor tiles.

However, the conventional registration device is complicated and cannot adjust an error between the surface skin 2 and the second roller 4 accurately.

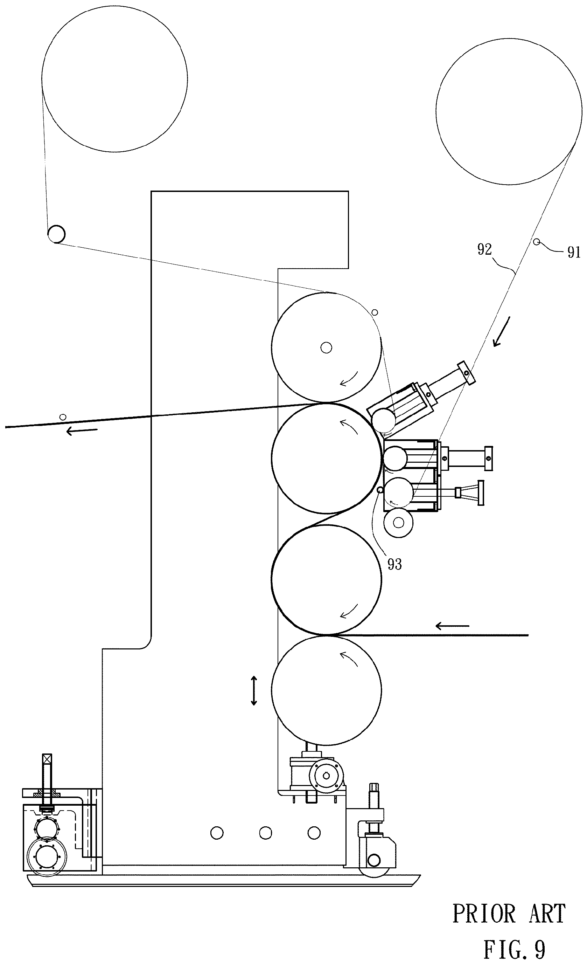

Referring to FIG. 9, a CCD sensor 91 senses color code and node on a printing layer 92, but errors of the color code and the node cannot be judged exactly. When the printing layer 92 is delivered slowly, a controller starts a heater 90 to heat the printing layer 92 so as to deliver the printing layer 92 quickly. However, errors between the printing layer and the second roller 4 cannot be adjusted accurately.

EP3308952A1 discloses that a plastic flooring contains: a substrate (11), a printing layer, and an abrasion resistance layer (13) which are delivered into a rolling machine (20) so that the rolling machine (20) presses the substrate (11), the printing layer, and the abrasion resistance layer (13) together. The substrate (11) includes at least one soft film layer (111) and at least one hard film layer (112), the printing layer forms on the substrate (11) and has a convex portion (121) and a concave portion (122), and the abrasion resistance layer (13) forms on the printing layer. The rolling machine (20) includes two delivery rollers (22), a guiding roller (23), and a pattern roller (24). The pattern roller (24) has pressing patterns (241), and the pressing patterns (241) have a depressed part (241) and a raised part (243). When the substrate (11), the printing layer, and the abrasion resistance layer (13) are pressed together, the convex portion (121) corresponds to the depressed part (241) and the concave portion (122) corresponds to the raised part (243) by using the registration transferring system (30).

EP 3437864A1 discloses that a method of making the plastic flooring contains steps of: A. providing the substrate (10) and delivering the substrate (10) toward a rolling unit (40); B. delivering a printing layer (20), wherein the printing layer (20) is blank and is delivered toward the rolling unit (40) by way of a second delivery roller mechanism (21); C. rolling, wherein the rolling unit (40) rolls the substrate (10) and the printing layer (20), and the printing layer (20) has three-dimensional embossing; D. digital printing, wherein color material (95) being printed on three-dimensional embossing (22) by using the digital print unit (50); E. coating an abrasion resistant layer (30), wherein a coating unit (60) coats wear-resistant materials of the abrasion resistant layer (30) on the printing layer (20); and F. shaping, wherein the plastic flooring material (1') is shaped so as to dry and harden the abrasion resistant layer (30).

US 2019/217524A1 discloses that a plastic flooring having registration system contains: an electronic control unit electrically connected with roller equipment and the registration system, the roller equipment is configured to deliver a substrate, a printing layer, and an abrasion resistance layer toward a rolling device. The rolling device includes a fourth roller set having pressing patterns identical to surface patterns of the printing layer, and the registration system has a first sensor, a tension regulator, and a second sensor. The first sensor is disposed on a delivery path of the printing layer which corresponds to the first sensor and has multiple positioning points. A length between a first positioning point and a second positioning point depends on a perimeter of the fourth roller set so as to form a print unit, and the first sensor is configured to sense the multiple positioning points and to transmit sensed signals to the electronic control unit.

However, above-mentioned prior arts cannot receive sensed values of the first sensors and the second sensor and compares the divided number so as to judge the error between the pressing patterns of the fourth roller set and the surface patterns of the printing layer, thereafter, the tension regulator and the fourth roller set adjust the error so as to position the three-dimensional patterns accurately at a low cost.

The present invention has arisen to mitigate and/or obviate the afore-described disadvantages.

### SUMMARY OF THE INVENTION

The primary aspect of the present invention is to provide equipment for making plastic flooring and having a registration system in which the computing module receives sensed values of the first sensors and the second sensor and compares the divided number so as to judge the error between the pressing patterns of the fourth roller set and the surface patterns of the printing layer, thereafter, the tension regulator and the fourth roller set adjust the error so as to position the three-dimensional patterns accurately at a low cost.

### BRIEF DESCRIPTION OF THE DRAWINGS

FIG. 1 is a schematic view showing the operation of equipment for making plastic flooring and having a registration system according to a preferred embodiment of the present invention.
FIG. 2 is a schematic view showing the operation of equipment for making plastic flooring and having a registration system according to another preferred embodiment of the present invention.
FIG. 3 is a schematic view showing the operation of equipment for making plastic flooring and having a registration system according to another preferred embodiment of the present invention.
FIG. 4 is a schematic view showing the operation of a part of equipment for making plastic flooring and having a registration system according to the preferred embodiment of the present invention.
FIG. 5 is another schematic view showing the operation of a part of equipment for making plastic flooring and having a registration system according to the preferred embodiment of the present invention.
FIG. 6 is also another schematic view showing the operation of a part of equipment for making plastic flooring and having a registration system according to the preferred embodiment of the present invention.
FIG. 7 is still another schematic view showing the operation of a part of equipment for making plastic flooring and having a registration system according to the preferred embodiment of the present invention.
FIG. 8 is a perspective view of a conventional registration device.
FIG. 9 is a schematic view of another conventional registration device.

### DETAILED DESCRIPTION OF THE PREFERRED EMBODIMENTS

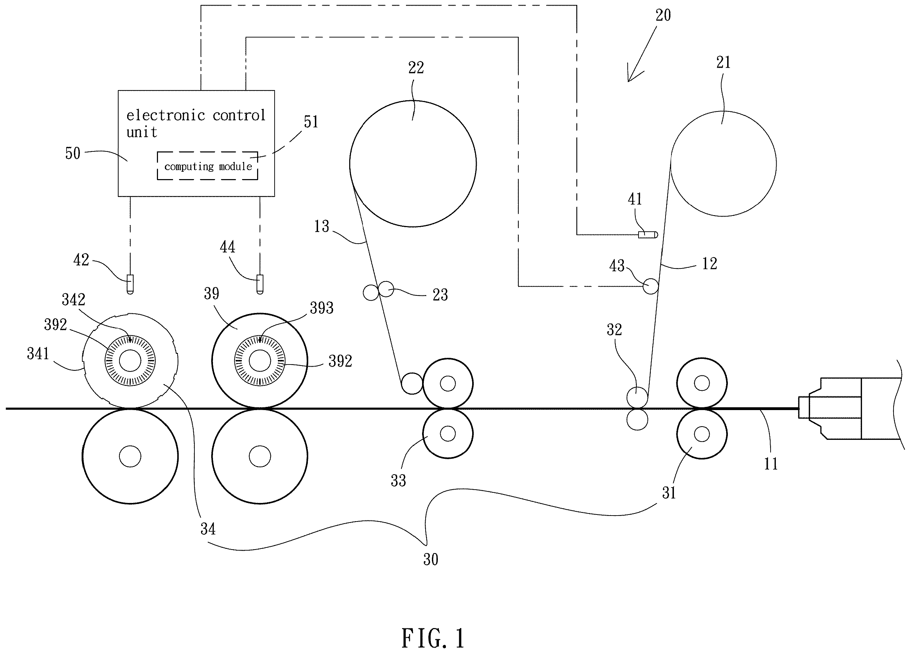

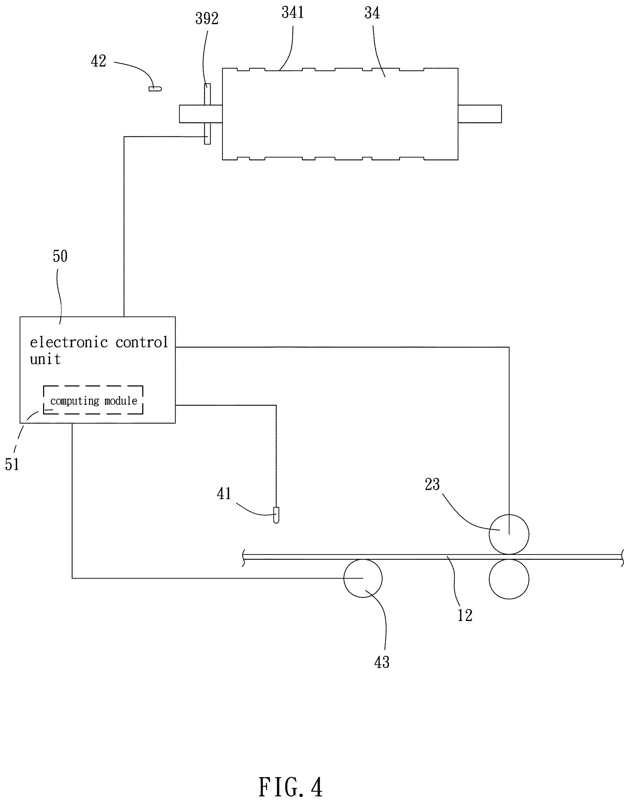

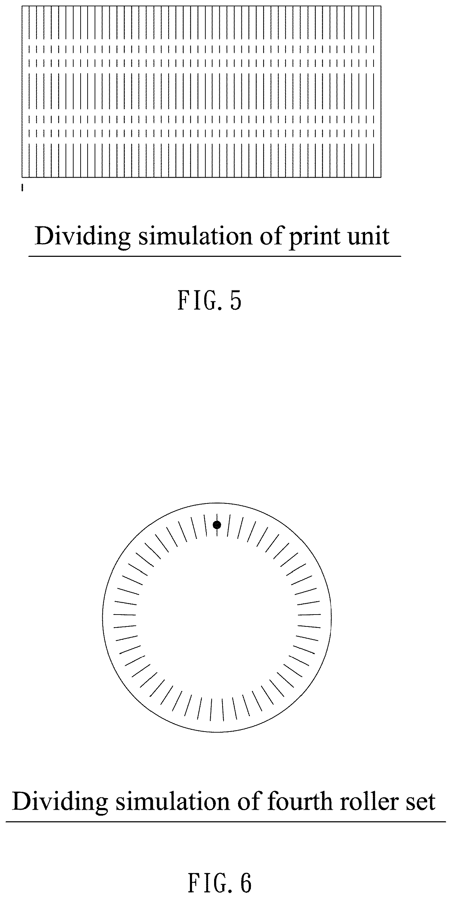

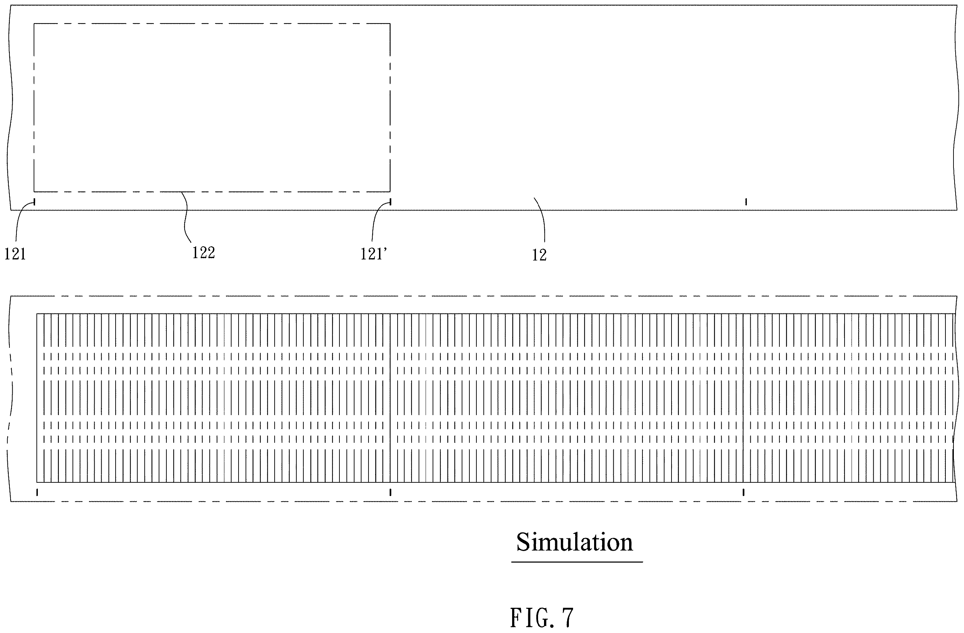

With reference to FIGS. 1 to 7, equipment for making plastic flooring and having a registration system according to a preferred embodiment of the present invention the plastic flooring includes a substrate 11, a printing layer 12, an abrasion resistance layer 13, and the equipment comprises roller equipment 20 having a rolling device 30 configured to deliver and roll the substrate 11, the printing layer 12, and the abrasion resistance layer 13 so that the rolling equipment 20 rolls the substrate 11, the printing layer 12, and the abrasion resistance layer 13 together by mating with the registration system and an electronic control unit 50, thus forming three-dimensional patterns on the plastic flooring.

The roller equipment 20 further includes a first delivery roller 21 configured to deliver the printing layer 12 toward the rolling device 30, a second delivery roller 22 configured to convey the abrasion resistance layer 13 toward the rolling device 30, and a feeding roller 23 configured to facilitate delivery stability toward the abrasion resistance layer 13.

As shown in FIG. 1, the registration transferring system 30 includes four roller sets horizontally arranged therein, for example, the registration transferring system 30 includes a first roller set 31 fixed on a machine frame configured to roll the substrate 11 in a predetermined thickness, a second roller 32 configured to roll the printing layer 12 onto the roller 11, a third roller set 33 configured to roll the abrasion resistance layer 13 onto the printing layer 12, and a fourth roller set 34 configured to roll the substrate 11, the printing layer 12, and the abrasion resistance layer 13.

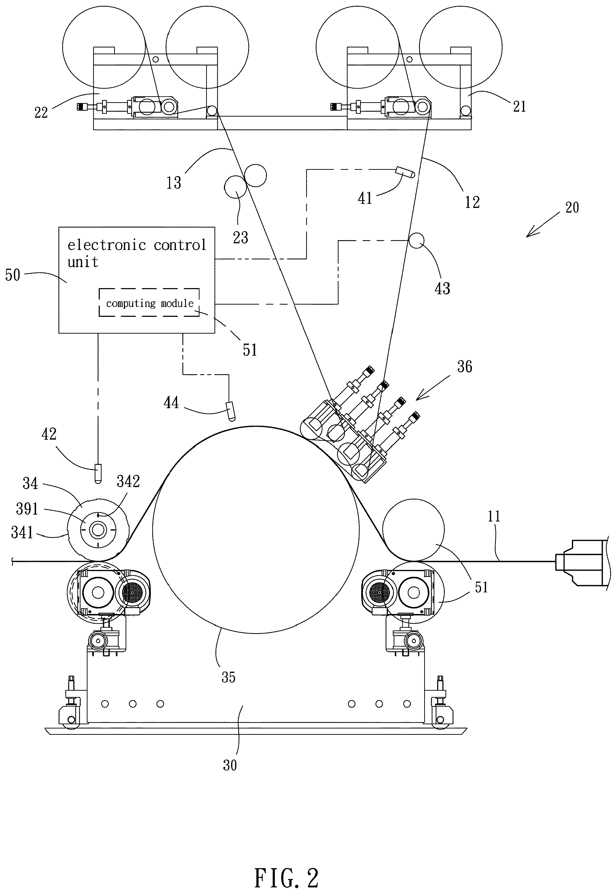

As illustrated in FIG. 2, the registration transferring system 30 includes five roller sets horizontally arranged therein, for example, the registration transferring system 30 includes the first roller set 31, a fifth roller set 35, and the fourth roller set 34, wherein the printing layer 11 and the abrasion resistance layer 13 are guided toward the fifth roller set 35 by way of a guiding roller set 36 so that the printing layer 11 and the abrasion resistance layer 13 are rolled by the fifth roller set 35.

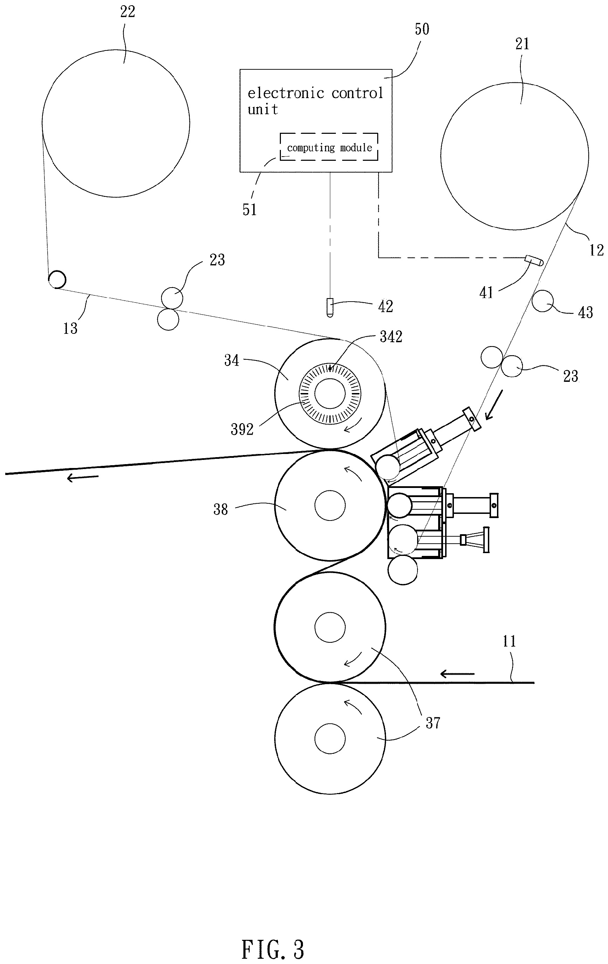

As shown in FIG. 3, the registration transferring system 30 includes fourth roller sets vertically arranged therein, for example, the registration transferring system 30 includes two transportation rollers 37, a mirror roller 38, and a fourth roller set 34 which are arranged from a lower end of the machine frame to an upper end of the machine frame. The fourth roller set 34 has pressing patterns 341 formed thereon identical to surface patterns of the printing layer 12 so as to roll the base 11, the printing layer 12, and the abrasion resistance layer 13, thus forming the three-dimensional patterns on the plastic flooring.

The registration system includes a first sensor 41, a second sensor 42, and a tension regulator 43.

The first sensor 41 is an electric eye or a camera and is disposed on a starting portion of a delivery path of the printing layer 12, wherein the printing layer 12 corresponds to a profile of the first sensor 41, the printing layer 12 has multiple positioning points 121 separated from one another, wherein a length between a first positioning point 121 and a second positioning point 121' depends on a perimeter of the fourth roller set 34 so as to form a print unit 122, and the perimeter of the fourth roller set 34 is more than a length of the print unit 12. The first sensor 41 is configured to sense the multiple positioning points 121 and transmits sensed signals to the electronic control unit 50.

The second sensor 42 is configured to sense rotation angle and location of the fourth roller set 34, wherein the fourth roller set 34 has at least one first start point 342 formed thereon so that the second sensor 42 sends sensed signal of the at least one first start point 342 to the electronic control unit 50.

The at least one first start point 342 is formed on two outer surfaces of the fourth roller set 34. Alternatively, a rotating disc 391 is rotatably connected on a rotary shaft of the fourth roller set 34 and the at least one first start point 342 is formed on the rotating disc 391, wherein the at least one first start point 342 is a signal receiving element, and the second sensor 42 transmits light signals. When the fourth roller set 34 rotates, the light signals contact with the at least one first start point 342 from the second sensor 42 so as to send the sensed signals toward the electronic control unit 50. Alternatively, the at least one first start point 342 is formed on an encoder 392, and the encoder 392 is fixed on the rotary shaft of the fourth roller set 34, wherein the second sensor 42 mates with the encoder 392 so as to sense an original position of the fourth roller set 34 or/and the rotation angle of the fourth roller set 34, and the second sensor 42 transmits the sensed signals to the electronic control unit 50.

The tension regulator 43 is mounted on a delivery start end of the printing layer 12 so as to adjust tension as delivering the printing layer 12.

The electronic control unit 50 is electrically connected with the roller equipment 20, the rolling device 30, and the registration system, wherein the electronic control unit 50 includes a computing module 51, when receiving the sensed signals of each positioning point 121 of the printing layer 12, the computing module 51 divides the print unit 122 into several parts evenly and constructs successive delivery simulation of a travel and a transportation speed from a delivery starting point to the fourth roller set 34.

When the electronic control unit 50 receives signals of the at least one first start point 342 of the fourth roller set 34, the computing module 51 simulates a divided number of the perimeter of the fourth roller set 34, and the divided number of the perimeter of the fourth roller set 34 is identical to a simulating number of the print unit 122 so as to compare simulated data of the printing layer 12 and that of the fourth roller set 34, hence when the base 11, the printing layer 12, and the abrasion resistance layer 13 are rolled by the fourth roller set 34, it is possible to judge whether the pressing patterns 341 correspond to the surface patterns of the printing layer 12. When a speed of the printing layer 12 is too fast or too slow, the tension regulator 43 adjusts the tension of the printing layer 12 so as to regulate an error between the pressing patterns 341 of the fourth roller set 34 and the surface patterns of the printing layer 12. When a divided number of each of the print unit 122 and the fourth roller set 34 increases, a judged value of the error is accurate more and more.

A rotation speed of the fourth roller set 34 is adjusted by mating a third sensor 44 or a fourth sensor 45 with a locating roller 39 so as to adjust the error between the pressing patterns 341 of the fourth roller set 34 and the surface patterns of the printing layer 12. When the error occurs, the tension regulator 43 adjusts the tension of the printing layer 12, and the rotation speed of the fourth roller set 34 is adjustable.

Referring to FIG. 1, when the roller equipment 20 does not roll the base 11, the printing layer 12, and the abrasion resistance layer 13, wherein the locating roller 39 is arranged adjacent to the fourth roller set 34 and its diameter is equal to that of the fourth roller set 34, and the perimeter of the locating roller 39 is identical to the length of the print unit 12, and the locating roller 39 has a second start point 391 formed on one side thereof and a third sensor 44 fixed outside the second start point 391 so that the third sensor 44 senses rotation of the locating roller 39 and transmits sensed information of the second start point 39 to the electronic control unit 50. Thereafter, the computing module 51 simulates a divided number of a perimeter of the locating roller 39 identical to that of the print unit 122, hence before the fourth roller set 34 rolls the printing layer 12, the simulated data of the printing layer 12 is compared with that of the locating roller 39 so as to judge whether the pressing patterns 341 of the fourth roller set 34 correspond to the surface patterns of the printing layer 12. When the speed of the printing layer 12 is too fast or too slow, the tension regulator 43 adjusts the tension of the printing layer 12. Alternatively, the rotation speed of the fourth roller set 34 is adjusted so as to regulate the error between the pressing patterns 341 of the fourth roller set 34 and the surface patterns of the printing layer 12.

As illustrated in FIG. 2, when the roller equipment 20 includes the fifth roller set 35 configured to roll the substrate 11, the printing layer 12, and the abrasion resistance layer 13, wherein the fourth sensor 45 is arranged adjacent to the fifth roller set 35, wherein after the substrate 11, the printing layer 12, and the abrasion resistance layer 13 are rolled, and the fourth sensor 45 senses the multiple positioning points 121 and transmits the sensed signals to the electronic control unit 50.

When the sensed signals of each positioning point 121 from the fourth sensor 45 are received by the electronic control unit 50, the computing module 51 compares whether a delivery travel of the printing layer 12 from the first sensor 41 to the second sensor 42 is equal to a delivery simulation travel of the computing module 51, thus judging whether the surface patterns of the printing layer 12 correspond to the pressing patterns 341 of the fourth roller set 34. When the speed of the printing layer 12 is too fast or too slow, the tension regulator 43 adjusts the tension of the printing layer 12. Alternatively, the rotation speed of the fourth roller set 34 is adjusted so as to regulate the error between the pressing patterns 341 of the fourth roller set 34 and the surface patterns of the printing layer 12.

Accordingly, the computing module 51 receives sensed values of the first sensors 41 and the second sensor 42 and compares the divided number so as to judge the error between the pressing patterns 341 of the fourth roller set 34 and the surface patterns of the printing layer 12. Thereafter, the tension regulator 43 and the fourth roller set 34 adjust the error so as to position the three-dimensional patterns accurately at a low cost.

## Claims

1. Equipment for making plastic flooring and having a registration system comprising:
an electronic control unit (50) electrically connected with roller equipment (20) and the registration system, the roller equipment (20) being configured to deliver a substrate (11), a printing layer (12), and an abrasion resistance layer (13) toward a rolling device (30) so that the rolling device (30) rolls the plastic flooring, the rolling device (30) including a fourth roller set (34) having pressing patterns (341) identical to surface patterns of the printing layer (12), and the registration system having a first sensor (41), a tension regulator (43), and a second sensor (42); wherein
the first sensor (41) is disposed on a delivery path of the printing layer (12), the printing layer (12) corresponds to the first sensor (41), the printing layer (12) has multiple positioning points (121) separated from one another, wherein a length between a first positioning point (121) and a second positioning point (121') depends on a perimeter of the fourth roller set (34) so as to form a print unit (122), and the first sensor (41) is configured to sense the multiple positioning points (121) and to transmit sensed signals to the electronic control unit (50);
wherein the tension regulator (43) is mounted on a delivery start end of the printing layer (12) so as to adjust tension as delivering the printing layer (12);
wherein the second sensor (42) is configured to sense rotation location of the fourth roller set (34), and a perimeter of the fourth roller set (34) is equal to a length of the print unit (122) of the printing layer (12), wherein the fourth roller set (34) has at least one first start point (342) formed thereon so that the second sensor (42) sends sensed signal of the at least one first start point (342) to the electronic control unit (50);
wherein the electronic control unit (50) includes a computing module (51), when receiving sensed signals of each positioning point (121) of the printing layer (12), the computing module (51) divides the print unit (122) into several parts evenly and constructs successive delivery simulation of a travel and a transportation speed from a delivery starting point to the fourth roller set (34); when the electronic control unit (50) receives signals of the at least one first start point (342) of the fourth roller set (34), the computing module (51) simulates a divided number of the perimeter of the fourth roller set (34), and the divided number of the perimeter of the fourth roller set (34) is identical to a simulating number of the print unit (122) so as to compare simulated data of the printing layer (12) and that of the fourth roller set (34), hence when the substrate (11), the printing layer (12), and the abrasion resistance layer (13) are rolled by the fourth roller set (34), it is possible to judge whether the pressing patterns (341) correspond to the surface patterns of the printing layer (12);
when a speed of the printing layer (12) is too fast or too slow, the tension regulator (43) adjusts the tension of the printing layer (12) so as to regulate an error between the pressing patterns (341) of the fourth roller set (34) and the surface patterns of the printing layer (12).

2. The equipment as claimed in claim 1, **characterized in that** a perimeter of the fourth roller set (34) is more than a length of the print unit (122) of the printing layer (12).

3. The equipment as claimed in claim 1, **characterized in that** the at least one first start point (342) is formed on two outer surfaces of the fourth roller set (34) or a rotating disc (391) is rotatably connected on a rotary shaft of the fourth roller set (34) and the at least one first start point (342) is formed on the rotating disc (391), wherein the at least one first start point (342) is a signal receiving element, and the second sensor (42) transmits light signals.

4. The equipment as claimed in claim 1, **characterized in that** the at least one first start point (342) is formed on an encoder (392), and the encoder (392) is fixed on the rotary shaft of the fourth roller set (34), wherein the second sensor (42) mates with the encoder (392) so as to sense an original position of the fourth roller set (34) or/and a rotation angle of the fourth roller set (34), and the second sensor (42) transmits the sensed signals to the electronic control unit (50).

5. The equipment as claimed in claim 1, **characterized in that** when the roller equipment (20) does not roll the substrate (11), the printing layer (12), and the abrasion resistance layer (13), a locating roller (39) is arranged adjacent to the fourth roller set (34) and its diameter is equal to that of the fourth roller set (34), wherein the perimeter of the locating roller (39) is identical to the length of the print unit (122), and the locating roller (39) has a second start point (391) formed on one side thereof and a third sensor (44) fixed outside the second start point (391) so that the third sensor (44) senses rotation of the locating roller (39) and transmits sensed information of the second start point (391) to the electronic control unit (50), thereafter the computing module (51) simulates a divided number of a perimeter of the locating roller (39) identical to that of the print unit (122), hence before the fourth roller set (34) rolls the printing layer (12), the simulated data of the printing layer (12) is compared with that of the locating roller (39) so as to judge whether the pressing patterns (341) of the fourth roller set (34) correspond to the surface patterns of the printing layer (12); when the speed of the printing layer (12) is too fast or too slow, the tension regulator (43) adjusts the tension of the printing layer (12), alternatively, the rotation speed of the fourth roller set (34) is adjusted so as to regulate the error between the pressing patterns (341) of the fourth roller set (34) and the surface patterns of the printing layer (12).

6. The equipment as claimed in claim 1, **characterized in that** when the roller equipment (20) includes a fifth roller set (35) configured to roll the substrate (11), the printing layer (12), and the abrasion resistance layer (13), wherein a fourth sensor (45) is arranged adjacent to the fifth roller set (35), wherein after the substrate (11), the printing layer (12), and the abrasion resistance layer (13) are rolled, and the fourth sensor (45) senses the multiple positioning points (121) and transmits the sensed signals to the electronic control unit (50).

## Patentansprüche

1. - Anlage zur Herstellung eines Kunststoffbodens und mit einem Ausrichtungssystem, umfassend:
eine elektronische Steuereinheit (50), die mit einer Walzenanlage (20) und dem Ausrichtungssystem elektrisch verbunden ist, wobei die Walzenanlage (20) dazu ausgelegt ist, ein Substrat (11), eine Druckschicht (12) und eine Abriebfestigkeitsschicht (13) zu einer Walzvorrichtung (30) zuzuführen, so dass die Walzvorrichtung (30) den Kunststoffboden walzt, wobei die Walzvorrichtung (30) einen vierten Walzensatz (34) mit Pressmustern (341) umfasst, die mit Oberflächenmustern der Druckschicht (12) identisch sind, und das Ausrichtungssystem einen ersten Sensor (41), eine Spannungsregler (43) und einen zweiten Sensor (42) aufweist; wobei
der erste Sensor (41) auf einem Zuführpfad der Druckschicht (12) angeordnet ist, die Druckschicht (12) dem ersten Sensor (41) entspricht, und die Druckschicht (12) mehrere Positionierungspunkte (121) aufweist, die voneinander getrennt sind, wobei eine Länge zwischen einem ersten Positionierungspunkt (121) und einem zweiten Positionierungspunkt (121') von einem Umfang des vierten Walzensatzes (34) abhängt, um eine Druckeinheit (122) zu bilden, und der erste Sensor (41) zum Erfassen der mehreren Positionierungspunkte (121) und zum Senden von erfassten Signalen an die elektronische Steuereinheit (50) ausgelegt ist;
wobei der Spannungsregler (43) an einem Zufuhrstartende der Druckschicht (12) montiert ist, um eine Spannung anzupassen, während die Druckschicht (12) zugeführt wird;
wobei der zweite Sensor (42) zum Erfassen einer Drehposition des vierten Walzensatzes (34) ausgelegt ist, und ein Umfang des vierten Walzensatzes (34) gleich einer Länge der Druckeinheit (122) der Druckschicht (12) ist, wobei der vierte Walzensatz (34) mindestens einen ersten Startpunkt (342) aufweist, der so darauf ausgebildet ist, dass der zweite Sensor (42) ein erfasstes Signal des mindestens einen ersten Startpunkts (342) an die elektronische Steuereinheit (50) sendet;
wobei die elektronische Steuereinheit (50) ein Rechenmodul (51) umfasst, das Rechenmodul (51) bei Empfang von erfassten Signalen jedes Positionierungspunkts (121) der Druckschicht (12) die Druckeinheit (122) gleichmäßig in mehrere Teile teilt und eine Sukzessivzufuhrsimulation eines Vorschubs und einer Transportgeschwindigkeit von einem Zufuhrstartpunkt zum vierten Walzensatz (34) erstellt; das Rechenmodul (51) eine geteilte Anzahl des Umfangs des vierten Walzensatzes (34) simuliert, wenn die elektronische Steuereinheit (50) Signale des mindestens einen ersten Startpunkts (342) des vierten Walzensatzes (34) empfängt, und die geteilte Anzahl des Umfangs des vierten Walzensatzes (34) mit einer Simulationsanzahl der Druckeinheit (122) identisch ist, um simulierte Daten der Druckschicht (12) und die des vierten Walzensatzes (34) zu vergleichen, und es infolgedessen möglich ist, zu beurteilen, ob die Pressmuster (341) den Oberflächenmustern der Druckschicht (12) entsprechen, wenn das Substrat (11), die Druckschicht (12) und die Abriebfestigkeitsschicht (13) durch den vierten Walzensatz (34) gewalzt werden;
der Spannungsregler (43) die Spannung der Druckschicht (12) anpasst, wenn eine Geschwindigkeit der Druckschicht (12) zu schnell oder zu langsam ist, um einen Fehler zwischen den Pressmustern (341) des vierten Walzsatzes (34) und den Oberflächenmustern der Druckschicht (12) zu regulieren.

2. - Anlage nach Anspruch 1, **dadurch gekennzeichnet, dass** ein Umfang des vierten Walzensatzes (34) mehr als eine Länge der Druckeinheit (122) der Druckschicht (12) beträgt.

3. - Anlage nach Anspruch 1, **dadurch gekennzeichnet, dass** der mindestens eine erste Startpunkt (342) auf zwei Außenflächen des vierten Walzensatzes (34) ausgebildet ist, oder eine Drehscheibe (391) drehbar an eine Drehwelle des vierten Walzensatzes (34) angeschlossen ist, und der mindestens eine ersten Startpunkt (342) auf der Drehscheibe (391) ausgebildet ist, wobei der mindestens eine erste Startpunkt (342) ein Signalempfangselement ist, und der zweite Sensor (42) Lichtsignale sendet.

4. - Anlage nach Anspruch 1, **dadurch gekennzeichnet, dass** der mindestens eine Startpunkt (342) auf einem Encoder (392) ausgebildet ist, und der Encoder (392) auf der Drehwelle des vierten Walzensatzes (34) fixiert ist, wobei der zweite Sensor (42) mit dem Encoder (392) gekoppelt ist, um eine Ausgangsposition des vierten Walzensatzes (34) und/oder einen Drehwinkel des vierten Walzensatzes (34) zu erfassen, und der zweite Sensor (42) die erfassten Signale an die elektronische Steuereinheit (50) sendet.

5. - Anlage nach Anspruch 1, **dadurch gekennzeichnet, dass**, wenn die Walzanlage (20) das Substrat (11), die Druckschicht (12) und die Abriebfestigkeitsschicht (13) nicht walzt, eine Positionierwalze (39) benachbart zum vierten Walzensatz (34) angeordnet wird und ihr Durchmesser gleich dem des vierten Walzensatzes (34) ist, wobei der Umfang der Positionierwalze (39) mit der Länge der Druckeinheit (122) identisch ist, und die Positionierwalze (39) einen zweiten Startpunkt (391) aufweist, der auf einer Seite davon ausgebildet ist, und ein dritter Sensor (44) außerhalb des zweiten Startpunkts (391) so fixiert ist, dass der dritte Sensor (44) Drehung der Positionierwalze (39) erfasst und erfasste Informationen des zweiten Startpunkts (391) an die elektronische Steuereinheit (50) sendet, das Rechenmodul (51) danach eine geteilte Anzahl eines Umfangs der Positionierwalze (39) simuliert, die mit der der Druckeinheit (122) identisch ist, und infolgedessen die simulierten Daten der Druckschicht (12) mit denen der Positionierwalze (39) verglichen werden, bevor der vierte Walzensatz (34) die Druckschicht (12) walzt, um zu beurteilen, ob die Druckmuster (341) des vierten Walzensatzes (34) den Druckmustern der Druckschicht (12) entsprechen; der Spannungsregler (43) die Spannung der Druckschicht (12) anpasst, wenn eine Geschwindigkeit der Druckschicht (12) zu schnell oder zu langsam ist, wobei alternativ die Drehgeschwindigkeit des vierten Walzensatzes (34) angepasst wird, um den Fehler zwischen den Pressmustern (341) der vierten Walze (34) und den Oberflächenmusterns der Druckschicht (12) zu regulieren.

6. - Anlage nach Anspruch 1, **dadurch gekennzeichnet, dass** die Walzenanlage (20) einen fünften Walzensatz (35) umfasst, der zum Walzen des Substrats (11), der Druckschicht (12) und der Abriebfestigkeitsschicht (13) ausgelegt ist,
wobei ein vierter Sensor (45) benachbart zum fünften Walzensatz (35) angeordnet ist, wobei nach dem Walzen des Substrats (11), der Druckschicht (12) und der Abriebfestigkeitsschicht (13) der vierte Sensor (45) die mehreren Positionierungspunkte (121) erfasst und die erfassten Signale an die elektronische Steuereinheit (50) sendet.

## Revendications

1. - Equipement pour fabriquer un revêtement de sol en matière plastique et ayant un système d'alignement comprenant :
une unité de commande électronique (50) reliée électriquement à un équipement à rouleaux (20) et au système d'alignement, l'équipement à rouleaux (20) étant configuré pour distribuer un substrat (11), une couche d'impression (12) et une couche de résistance à l'abrasion (13) vers un dispositif de laminage (30) de telle sorte que le dispositif de laminage (30) lamine le revêtement de sol en matière plastique, le dispositif de laminage (30) comprenant un quatrième ensemble de rouleaux (34) ayant des motifs de pression (341) identiques à des motifs de surface de la couche d'impression (12), et le système d'alignement ayant un premier capteur (41), un régulateur de tension (43) et un deuxième capteur (42) ;
le premier capteur (41) étant disposé sur un trajet de distribution de la couche d'impression (12), la couche d'impression (12) correspondant au premier capteur (41), la couche d'impression (12) ayant de multiples points de positionnement (121) séparés les uns des autres, une longueur entre un premier point de positionnement (121) et un deuxième point de positionnement (121') dépendant d'un périmètre du quatrième ensemble de rouleaux (34) de façon à former une unité d'impression (122), et le premier capteur (41) étant configuré pour détecter les multiples points de positionnement (121) et transmettre à l'unité de commande électronique (50) des signaux détectés ;
le régulateur de tension (43) étant monté sur une extrémité de départ de distribution de la couche d'impression (12) de façon à ajuster la tension lors de la distribution de la couche d'impression (12) ;
le deuxième capteur (42) étant configuré pour détecter un emplacement de rotation du quatrième ensemble de rouleaux (34), et un périmètre du quatrième ensemble de rouleaux (34) étant égal à une longueur de l'unité d'impression (122) de la couche d'impression (12), le quatrième ensemble de rouleaux (34) ayant au moins un premier point de départ (342) formé sur celui-ci de telle sorte que le deuxième capteur (42) envoie un signal détecté de l'au moins un premier point de départ (342) à l'unité de commande électronique (50) ;
l'unité de commande électronique (50) comprenant un module de calcul (51), le module calcul (51), lors de la réception de signaux détectés de chaque point de positionnement (121) de la couche d'impression (12), divisant l'unité d'impression (122) en plusieurs parties de manière égale et construisant une simulation de distribution successive d'un déplacement et d'une vitesse de transport depuis un point de départ de distribution jusqu'au quatrième ensemble de rouleaux (34) ; lorsque l'unité de commande électronique (50) reçoit des signaux de l'au moins un premier point de départ (342) du quatrième ensemble de rouleaux (34), le module de calcul (51) simulant un nombre divisé du périmètre du quatrième ensemble de rouleaux (34), et le nombre divisé du périmètre du quatrième ensemble de rouleaux (34) étant identique à un nombre de simulation de l'unité d'impression (122) de façon à comparer des données simulées de la couche d'impression (12) et celles du quatrième ensemble de rouleaux (34), ainsi, lorsque le substrat (11), la couche d'impression (12) et la couche de résistance à l'abrasion (13) sont laminés par le quatrième ensemble de rouleaux (34), il est possible de déterminer si les motifs de pression (341) correspondent aux motifs de surface de la couche d'impression (12) ;
lorsqu'une vitesse de la couche d'impression (12) est trop rapide ou trop lente, le régulateur de tension (43) ajustant la tension de la couche d'impression (12) de façon à réguler une erreur entre les motifs de pression (341) du quatrième ensemble de rouleaux (34) et les motifs de surface de la couche d'impression (12).

2. - Equipement selon la revendication 1, **caractérisé par le fait qu'**un périmètre du quatrième ensemble de rouleaux (34) est supérieur à une longueur de l'unité d'impression (122) de la couche d'impression (12).

3. - Equipement selon la revendication 1, **caractérisé par le fait que** l'au moins un premier point de départ (342) est formé sur deux surfaces extérieures du quatrième ensemble de rouleaux (34) ou un disque rotatif (391) est relié de manière rotative sur un arbre rotatif du quatrième ensemble de rouleaux (34) et l'au moins un premier point de départ (342) est formé sur le disque rotatif (391), l'au moins un premier point de départ (342) étant un élément de réception de signal et le deuxième capteur (42) émettant des signaux lumineux.

4. - Equipement selon la revendication 1, **caractérisé par le fait que** l'au moins un premier point de départ (342) est formé sur un codeur (392), et le codeur (392) est fixé sur l'arbre rotatif du quatrième ensemble de rouleaux (34), le deuxième capteur (42) étant mis en correspondance avec le codeur (392) de façon à détecter une position d'origine du quatrième ensemble de rouleaux (34) et/ou un angle de rotation du quatrième ensemble de rouleaux (34) et le deuxième capteur (42) transmettant à l'unité de commande électronique (50) les signaux détectés.

5. - Equipement selon la revendication 1, **caractérisé par le fait que**, lorsque l'équipement à rouleaux (20) ne lamine pas le substrat (11), la couche d'impression (12) et la couche de résistance à l'abrasion (13), un rouleau de positionnement (39) est disposé de manière adjacente au quatrième ensemble de rouleaux (34) et son diamètre est égal à celui du quatrième ensemble de rouleaux (34), le périmètre du rouleau de positionnement (39) étant identique à la longueur de l'unité d'impression (122), et le rouleau de positionnement (39) ayant un deuxième point de départ (391) formé sur un côté de celui-ci et un troisième capteur (44) fixé à l'extérieur du deuxième point de départ (391) de telle sorte que le troisième capteur (44) détecte une rotation du rouleau de positionnement (39) et transmet des informations détectées du deuxième point de départ (391) à l'unité de commande électronique (50), puis le module de calcul (51) simule un nombre divisé d'un périmètre du rouleau de positionnement (39) identique à celui de l'unité d'impression (122), ainsi, avant que le quatrième ensemble de rouleaux (34) ne lamine la couche d'impression (12), les données simulées de la couche d'impression (12) sont comparées à celles du rouleau de positionnement (39) de façon à déterminer si les motifs de pression (341) du quatrième ensemble de rouleaux (34) correspondent aux motifs de surface de la couche d'impression (12) ; lorsque la vitesse de la couche d'impression (12) est trop rapide ou trop lente, le régulateur de tension (43) ajustant la tension de la couche d'impression (12), ou bien la vitesse de rotation du quatrième ensemble de rouleaux (34) est ajustée de façon à réguler l'erreur entre les motifs de pression (341) du quatrième ensemble de rouleaux (34) et les motifs de surface de la couche d'impression (12).

6. - Equipement selon la revendication 1, **caractérisé par le fait que** l'équipement à rouleaux (20) comprend un cinquième ensemble de rouleaux (35) configuré pour laminer le substrat (11), la couche d'impression (12) et la couche de résistance à l'abrasion (13), un quatrième capteur (45) étant disposé de manière adjacente au cinquième ensemble de rouleaux (35), après que le substrat (11), la couche d'impression (12) et la couche de résistance à l'abrasion (13) ont été laminés le quatrième capteur (45) détectant les multiples points de positionnement (121) et transmettant à l'unité de commande électronique (50) les signaux détectés.
